# EUROPEAN PATENT APPLICATION

(11) **EP 2 254 074 A1**
(43) Date of publication of application: **24.11.2010**
(21) Application number: 09006801.6
(22) Date of filing: 20.05.2009
(51) Int. Cl.: G06K 7/00

(54) **Read/write device for non-contact communication**

(71) Applicant: Legic Identsystems Ag, 8620 Wetzikon (CH)
(72) Inventor: Hausmann, Peter, 8118 Pfaffhausen (CH); Plüss, Marcel, 8632 Tann (CH); Plüss, Peter, 8632 Tann (CH)
(74) Representative: Rentsch & Partner

(57) **Abstract**

A read/write device (1) for a non-contact communication (4) with at least one data carrier (2) by way of an electro-magnetic field (3) transceived via at least one antenna (11) comprises a current source (12) and a control module (14). The current source (12) is configured to provide a current (i) to the antenna (11). The control module (14) is configured to perform the non-contact communication (4) by driving the current source (12). Having a current source (12) for providing the current to the antenna (11) makes it possible to use any kind of antenna (11) for emitting the electro-magnetic field (3), regardless of the impedance of the antenna (11) and without having to install a matching network and/or filters for adapting the read/write device (1) to the antenna (11).

## Description

### Field of the Invention

The present invention relates to a read/write device for non-contact communication with at least one data carrier by way of an electro-magnetic field transceived via at least one antenna.

### Background of the Invention

In a communication system, non-contact communication between a read/write device (reader) and a data carrier is effected by an electro-magnetic field provided (modulated, emitted) by the read/write device. For radio frequency identification (RFID), the electro-magnetic field between the reader and the data carrier basically defines all the relevant parameters of the communication. The electro-magnetic field is basically proportional to the current flowing through the antenna (antenna current) and the windings of the antenna (antenna windings).

As known from the prior art, the antenna current as needed is supplied by the reader, in particular a power source (voltage source) of the reader. Furthermore matching networks and/or filters are used to take into account the fact that in general each reader or each antenna, respectively, has a different inductivity. For each reader said inductivity has to be adapted to the parameters (performance parameters) of the reader; in particular, to the antenna or the antenna tuning circuit. For an adaptation, in general, a matching network, a trimmer (variable capacitor) or a filter circuit, or a combination thereof, is used. Said components are arranged between the antenna and the power source (voltage source). They are in particular used to individually tune the reader to the antenna, upon installation, taking into account environmental characteristics. Further limitations due to reactances, such as limited phase sensitivity, are possible. For example, a communication may not be possible within certain limited areas of the communication range.

Accordingly, state of the art read/write devices comprise in particular the following features: A voltage source in combination with an output filter or a matching network, or both, between the voltage source and the antenna. The voltage source is used to provide to the antenna the voltage as needed for communication. The read/write device is tuned by adjusting the output filter and/or the matching network to the antenna. Therefore, the current provided to the antenna depends on the voltage (of the voltage source) and varies, depending on the parameters of the non-contact communication.

Patent applications WO 99/43096 A1 or EP 1 134 690 A1 disclose examples of such readers or communication systems, respectively. These documents show how an antenna of a reader is tuned. Thereby, the current which flows through the antenna, and which depends on the voltage, is defined.

### Summary of the Invention

It is an object of the present invention to overcome the limitations of the prior art for a read/write device configured to provide non-contact communication with a data carrier by way of an electro-magnetic field transceived via an antenna. In particular, it is an object of the present invention to provide a read/write device for non-contact communication with a data carrier via the magnetic field, without an adjustment of the antenna to the read/write device or an adaptation of the read/write device to the antenna. In other words, it is an object of the present invention to provide a read/write device for non-contact communication with a data carrier, which read/write device does not require an adaptation to the antenna, or an adjustment of the antenna to the read/write device.

According to the present invention, these objects are achieved through the features of the independent claims. Further features or advantageous embodiments follow from the dependent claims and/or the description.

Particularly, the objects of the invention are achieved by a read/write device comprising an antenna driver, in particular a current source. The read/write device (hereinafter reader) is used for non-contact communication with at least one data carrier (e.g. a RFID transponder, an IC card or a tag) by way of an electro-magnetic field transceived via at least one antenna, provided the data carrier is within the communication range of the reader. The current source is used to drive (provide, impose) a current to the antenna for driving the antenna to emit an electro-magnetic field corresponding to the current. Thus, the current source is used to enable communication between the reader and the data carrier. In particular, the current source is used to transmit data, as encoded by the reader, from the reader to the data carrier. Furthermore the current source is used to power the data carrier, thereby making it possible to receive in the reader data from the data carrier. The received data is encoded by the data carrier and superposed on the current provided by the reader.

For non-contact communication, the current source - in particular the current provided to the antenna - does not depend on the antenna. In the broader sense, the current as provided by the current source and the current over the antenna are related to each other, and in a best case are practically the same. Depending on the strip lines used to connect the antenna, for example, the strip line length or the arrangement of the strip lines within the reader, current may be lost; Accordingly, the current provided to the antenna may be less than the current provided by the current source. Nevertheless, depending on the current provided to the antenna by the current source, any kind of antenna can basically be used to emit the electro-magnetic field, independent of the impedance of the antenna. In particular, there is no need to adjust the antenna to the power source, or to adjust the reader or antenna driver to the antenna by a matching network or filters, or a combination thereof.

Using a current source to provide the current to the antenna for emission of the corresponding electro-magnetic field has the effect that the antenna is provided with the same current. Accordingly also the data carrier is powered by the same current, or the respective electro-magnetic field. Upon installation and/or set-up of the reader, the current provided by the current source or needed by the data carrier is defined. In addition to parameters of the reader, the definition depends on environmental characteristics, for example the area where the reader is installed or where a communication between the reader and the data carrier shall be enabled. The current that can be provided by the current source may be limited by the reader parameters, such as e.g. antenna inductivity.

According to the invention, the reader comprises the current source and a control module. The non-contact communication takes place by way of an electro-magnetic field (in particular the magnetic field) transceived via at least one antenna. The current source is configured to provide the current to the antenna or to drive the antenna with said current. The current is used to power the data carrier and to perform (to execute) non-contact communication, in particular to encode said communication. The control module (e.g. a reader logic or a reader processing unit) is configured to drive or control the current source for performing non-contact communication. In particular the control module is used to provide to the current source information and /or parameters - or, in other words, the respective current - needed to perform said non-contact communication, such as coding of data or encoding of data carrier. In other words, the control module is configured to perform (to implement) the non-contact communication by driving the current source. The antenna may be electrically connected to the reader or may be an integrated part of the reader.

In a further embodiment the current source of the reader comprises at least one switching or amplifying element, such as a transistor, a field-effect transistor (FET) or an operational amplifier (OP-Amp). On one side, said element is connected to the control module via a transmission line, on the other side said element is connected to the antenna. The element is set-up and used to drive the current on the antenna. Functionally, said element regulates the current source and defines the current provided to the antenna.

When the transistor is used, the transistor acts as the current source. Hereby, a base (of the transistor) is in contact with the control module, a collector is in contact with the antenna and an emitter is grounded. In particular, it depends on the transistor or the control of the transistor, whether or not the current is made available to the antenna for emission.

In an embodiment, the reader is configured to provide, in addition to the current, a direct current to the antenna, preferably directly. Said direct current is greater than the amplitude of the current provided to the antenna for emission, with the effect that the total current on the antenna is always positive. Within physical limits, which for example depend on the antenna characteristics, the direct current can be provided by a power supply. The power supply may be located inside the reader, for example in the form of a battery, or the reader may be connected to the power supply, for example a mains supply. The power supply used to provide the direct and constant currant, and powered by a constant or in average constant voltage, is preferably directly connected to the antenna, i.e. to one connector or end of the antenna. The other connector or end of the antenna is connected to the current source, in particular to the transistor of the current source.

The direct current or the power supply providing the direct current, respectively, defines the amplitude of the current that may be handled by the current source, such that the current delivered to the antenna (comprising the direct current and the current delivered or imposed by the control module to the current source needed for non-contact communication) is positive at any time. Beside the current or the amplitude of the current, respectively, the power supply providing the direct current, in particular the voltage that may be applied to power the power supply, defines the communication distance between the reader and the data carrier. Furthermore, the communication distance depends on the antenna characteristics such as for example the antenna impedance (resistance). For an antenna with an impedance which is adapted to the communication or the data carrier, respectively, a power supply with a lower voltage can be used to achieve a communication range as desired. For an antenna for which the impedance is not specifically adapted to the communication or the data carriers, respectively, for example an antenna with a low impedance, the voltage of the power supply has to be higher to achieve the same communication range; otherwise, in case the voltage of the power supply is limited and cannot be set accordingly, the communication range is decreased. In practice, the voltage of the power supply is between 3 VDC and 50 VDC, but in theory can be even higher.

In another embodiment, the current source of the reader comprises two switching or amplifying elements. Both elements are connected to the control module and to the antenna. One element is further connected to a positive power supply - respectively a power supply with a positive voltage - and the other element is connected to a negative power supply. The positive respectively negative power supplies are used to alternatively provide a positive or a negative current to the antenna, respectively, depending on the driving of the current source by the control module.

In case the current source comprises as switching or amplifying elements two transistors, the emitter of the first transistor is connected to the positive power supply and the emitter of the second transistor is connected to a negative power supply. The collectors of both transistors are connected to the antenna and the receiver line, while the bases of both transistors are connected to the transmission line.

In an alternative embodiment, the control module is configured to drive the current source by supplying to the current source data (of the non-contact communication) encoded according to a transmission coding. Said data, or the transmission coding used to encode said data, is superposed on a carrier provided by the control module to the current source. The current source of the reader is then used to emit via the antenna the data by the electro-magnetic field. The transmission coding is used to encode data, or the respective communication, from the reader to the data carrier. The transmission coding is effected on the carrier provided by the control module. The carrier and the transmission coding superposed on the carrier (i.e. a representation of the corresponding data) are part of the current provided by the current source to the antenna.

Similarly, the communication from the data carrier to the reader takes place by data encoded by a receiver coding. After the transmission coding, the receiver coding is superposed by the data carrier on the carrier provided from the reader to the data carrier. Accordingly, data encoded by the receiver coding is to be understood as a reply to data corresponding to the transmission coding. Data defined by the receiver coding is provided to the control module via the antenna used for emission of the transmission coding and the carrier, or via an alternative antenna.

In a further embodiment, the reader comprises an amplifier module for amplifying the current provided to the antenna. The amplifier module is arranged between the control module and the current source, or between the current source and the antenna. The amplifier module is used to extend the communication range, provided that, for example, the direct current made available by the power supply remains greater than the current amplified by the amplifier module.

In another embodiment, the reader is configured to provide (generate) a disable signal. The disable signal is used to disable the current source, in particular to functionally disconnect the control module and the current source from one another. Disabling mainly takes place temporarily or periodically, so that, for example, the disable signal is deactivated or suspended a few times a second - for example every 0.3 second - to once every few seconds to check whether a data carrier is within the communication range of the reader. The disable signal may be provided by the control module via a disable signal line. Disabling the current source has the effect that the current source does not supply the current to the antenna. The disable signal may be provided by the control module being configured accordingly; in particular, by a further line different from the line used to connect control module and current source.

The invention is further directed towards a method of operating a reader for non-contact communication with at least one data carrier by way of an electro-magnetic field transceived via at least one antenna. According to the invention, the method comprises the steps of providing a current from a current source to the antenna for emitting the electro-magnetic field, and of driving the current source via a control module for performing non-contact communication via the electro-magnetic field.

In a further embodiment of the method, the communication from the reader to the card is effected by the current which comprises a representation of data, in particular a carrier and a superposed transmission coding used to encode data on the carrier and provided by the control module to the current source. The carrier may be superposed on a direct current which is delivered to the current source from a power supply. Furthermore, a transistor may be used to provide the current to the antenna. The transistor is a part, particularly the main part, of the current source.

The frequency of the electro-magnetic field provided by the reader, in particular the frequency of the carrier delivered by the control module of the reader, is between 100 kHz and 135 kHz, or a frequency of the industrial, scientific and medical band (ISM frequency), preferably 13.56 MHz.

### Brief Description of the Drawings

Aspects of the present invention will be described in more detail, by way of example, with reference to the following drawings. The description and the drawings should not be considered to limit the invention as claimed.
- Figure 1: shows functional components of a reader according to the state of the art with a voltage source and a matching network;
- Figure 2: shows functional components of a reader with a current source;
- Figure 3a: shows a reader, where a transmission coding is superposed on a current, before delivery to the current source;
- Figure 3b: shows a reader, where the transmission coding is superposed on the current in the current source;
- Figure 3c: shows a reader, where the current is generated in the current source, before the transmission coding is superposed;
- Figure 4: shows a reader with a control module and the current source, and an interac- tion of the reader with a data carrier;
- Figure 5: shows details of a first embodiment of the reader with the control module, the current source, and a power supply;
- Figure 6: shows details of another embodiment of the reader without power supply;
- Figure 7: shows details of a third embodiment of the reader with control module and current source; and
- Figure 8: shows details of a forth embodiment of the reader with control module and power source.

### Detailed Description of the Drawings

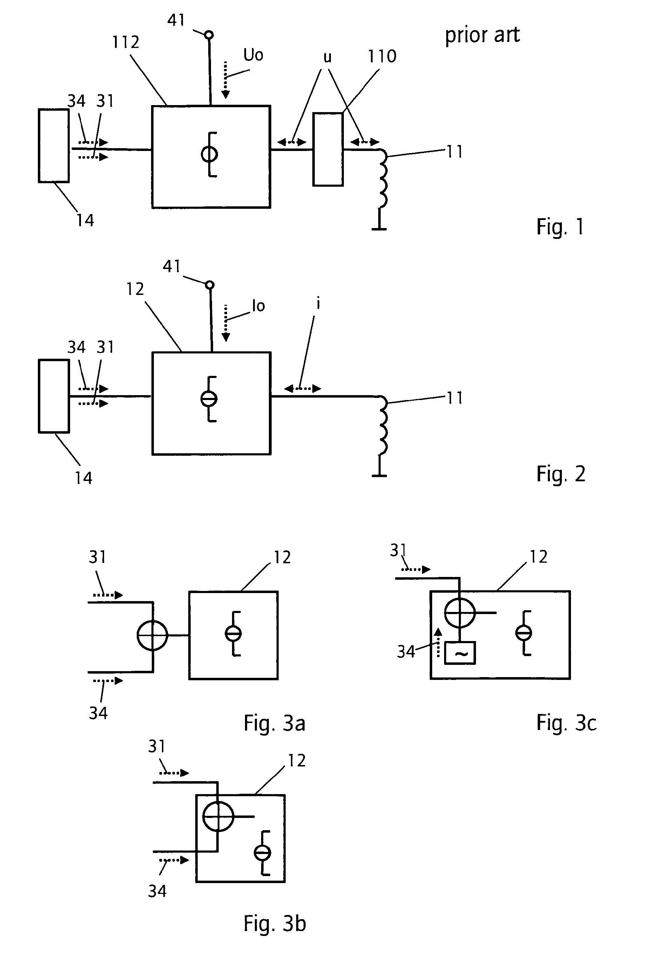

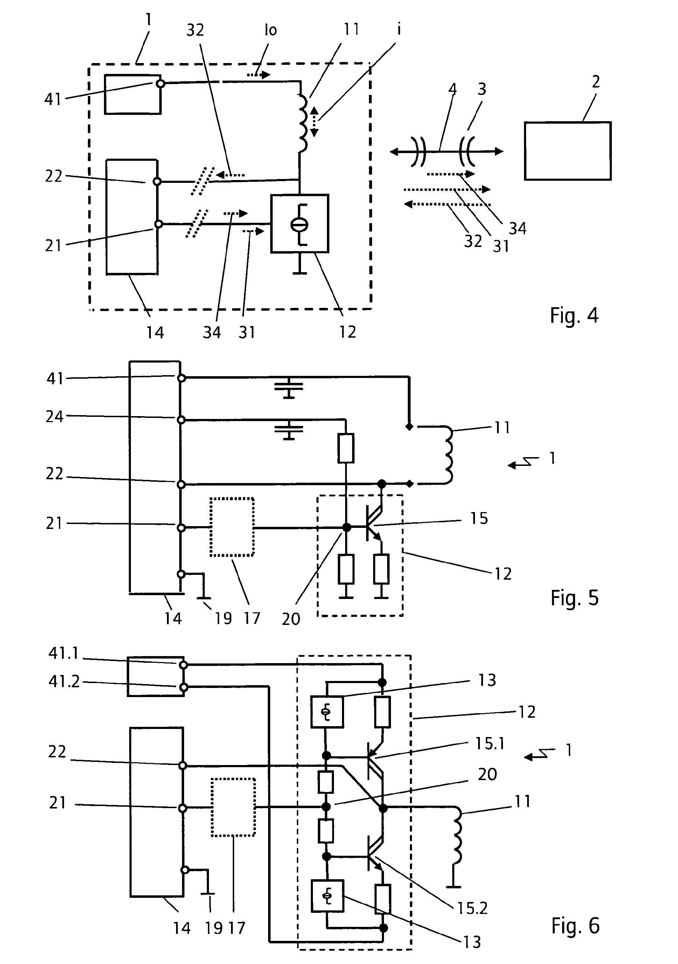

Figure 1 shows functional components of a reader according to the state of the art. The reader comprises in particular a voltage source 112 connected to an antenna 11. Between the antenna 11 and the voltage source 112 a matching network 110 is arranged. The circuit of the matching network 110 may comprise filters or trimmers, or a combination thereof. The matching network 110 is used to apply a voltage u, as supplied by the voltage source 112, to the antenna 11. The respective current provided to the antenna 11 depends on the voltage u and the antenna 11 or the antenna characteristics. The voltage source 112 may be connected to a power supply 41 which provides a supply voltage Uo. Non-contact communication 4 between the reader 1 and a data carrier 2 (see Figure 4), in particular the encoding of the data sent from the reader to the data carrier, is effected by transmission coding 31 of the data superposed on a carrier 34. In the prior art, the carrier 34 and transmission coding 31 are supplied to the antenna 11 via the voltage source 112.
Figure 2 shows functional components of a reader according to the invention. A current source 12 is connected to the antenna 11, preferably directly. Compared with a reader according to the prior art, in the reader according to the invention a matching network is not required. Non-contact communication 4 is enabled by the current source 12 providing a current i to the antenna 11. For communication 4 from the reader 1 to the data carrier 2 (see Figure 4), the current i comprises the carrier 34 and transmission coding 31 of the data superposed on the carrier 34, i.e. the current i depends on the carrier 34 and the transmission coding 31. The carrier 34 and transmission coding 34 are provided to the current source 12 by a control module 14, for example. In an embodiment, the current source 12 is provided with a direct current lo from the power supply 41. Thus, the current i is superposed on the direct current lo when emitted as an electro-magnetic field 3 (see Figure 4) over the antenna 11. Accordingly, the direct current lo is greater than the amplitude of the current i. Together with the current i, the direct current lo is supplied to the antenna 11 by or via the current source 12. The antenna 11 is used to emit the respective electro-magnetic field 3 (see Figure 4) of both currents.
Figures 3a to 3c show three different embodiments how to provide transmission coding 31 of data - used to encode the communication from the reader 1 to the data carrier 2 - and the carrier 34, if applicable, to the current source 12. In Figure 3a, the transmission coding 31 is superposed on the carrier 34 before the combined signal is provided to the current source 12 and then further to the antenna 11 (not shown). According to Figure 3b, both the carrier 34 and the transmission coding 31 are provided separately to the current source 12 and then superposed in the current source 12, before the combined signal is provided to the antenna 11. In a third embodiment, shown in Figure 3c, the carrier 34 is provided by the current source 12 itself, while the transmission coding 31 is provided to the current source 12. Similarly to the embodiment shown in Figure 3b, the transmission coding 31 is then superposed on the carrier 34 in the current source 12, before the combined signal is provided to the antenna 11 .
Figure 4 shows a read/write device (reader) 1 for non-contact communication with at least one data carrier 2, e.g. an RFID tag or IC card, via the electro-magnetic field 3. Thus, non-contact communication 4 takes places by exchanging data between the reader 1 and the data carrier 2 via a wireless interface. For communication 4 from the reader 1 to the data carrier 2, used is transmission coding 31 of the communication data superposed on a carrier 34. For communication 4 from the data carrier 2 to the reader 1, used is receiver coding 32 of the communication data - provided by the data carrier 2 - superposed on the carrier 34. Moreover, the carrier 34 transmitted by the reader 1 to the data carrier 2 is used to power the data carrier 2 during communication 4 from the data carrier 2 to the reader 1 (in addition to communication 4 from the reader 1 to the data carrier 2), and is thereby enabling bidirectional non-contact communication 4.

Non-contact communication 4 is effected using different frequencies or frequency ranges of the carrier 34, such as 100 kHz to 135 kHz, or a frequency of the industrial, scientific and medical band (ISM frequency). If for example non-contact communication 4 takes place at 13.56 MHz, different standardized RFID protocol (Radio Frequency IDentification) may be used, such as RFID protocols according to the international standards series ISO/IEC 14443, ISO/IEC 15693, ISO/IEC 18000, or NFC (Near Field Communication), or according to a proprietary data transmission protocol (RFID protocol).

As shown in Figure 4, the reader 1 comprises the control module 14 (also referred to as control unit, control logic or logic), the current source 12 and at least one antenna 11. Alternatively, the reader 1 comprises connectors to attach an external antenna to the reader 1 (as shown in Figure 5). Via a transmission line 21, the control module 14 is connected to the current source 12. The current source 12 and, via a receiver line 22, the control module 14 are connected to the antenna 11 - in particular, to one end of the antenna 11. Via the transmission line 21, the carrier 34 with the superposed transmission coding 31, if applicable, is provided from the control module 14 to the current source 12 - before the combined signal is further delivered (as the current i or as part of the current i) from the current source 12 to the antenna 11. The receiver line 22 is used to provide the receiver coding 32 superposed on the carrier 34, as received by the antenna 11, to the control module 14. Presence of receiver coding 32 depends on the communication 4 from the data carrier 2 to the reader 1, as presence of the transmission coding 31 depends on communication 4 from the reader 1 to the data carrier 2.

The antenna 11 - in particular the end of the antenna not connected to the current source 12 and the control module 14 - is connected to a power supply 41. The power supply 41 is arranged inside the reader 1, for example in the form of a rechargeable battery. In an embodiment, the power supply 41 is arranged outside the reader 1, for example when a permanent supply such as a mains supply is used. Depending on the antenna characteristics, such as the antenna impedance, the power supply 41 delivers to the antenna 11 a direct current lo, provided the power supply 41 is able to make available the respective supply voltage Uo related to the direct current lo. For example, the supply voltage Uo is in a range between 3 VDC and 50 VDC, or even more. The supply voltage Uo of the reader 1 is permanently fixed or set upon installation of the reader 1 and does not change. The current i of the current source 12 is superposed on the direct current lo, before the combined current is delivered to the antenna 11 for emission of the respective electro-magnetic field 3, in particular the electro-magnetic field 3 of the current i. The direct current lo defines the maximum amplitude of the current i that may be provided by the current source 12 to the antenna 11, so that the total current is positive at any time.

Non-contact communication 4 between the reader 1 and the data carrier 2 is effected via the electro-magnetic field 3, in particular the magnetic field of the current i. Communication 4 from the reader 1 to the data carrier 2 is effected by the carrier 34 and transmission coding 31 of communication data superposed on the carrier 34. For communication 4 from the data carrier 2 to the reader 1, the receiver coding 32 is superposed on the carrier 34 - as provided by the reader 1 - and provided via the antenna 11 to the control module 14.

In the reader 1, a matching network 110 is not required, contrary to a reader according to the prior art with a matching network 110 arranged between the power supply 41, the receiver line 22 and the antenna 11. A very simple matching network 110, for example, is realized via a first capacitor in the line connecting the power supply 41 (power supply line) and one side of the antenna 11, and a second capacitor between the power supply line and the receiver line 22 (in connect to the other side of the antenna 11).

Figure 5 shows a first embodiment of the reader 1 in more detail. The reader 1 comprises a current source 12 with a transistor 15, in particular a n-p-n transistor. The emitter of the transistor 15 is connected to ground 19 via a resistor. The collector is directly connected to one end of the antenna 11. The other end of the antenna 11 is directly connected to the power supply 41, which itself is grounded 19 via a capacitor. In this embodiment, the control module 14 also acts as the power supply 41. The base of the transistor 15 is connected to the control module 14 via a filter assembly 17. The filter assembly 17 of the transmission line 21 is used to transform a square signal delivered from the control module 14 into a sinus signal (of the carrier 34) delivered to the current source 12. The base is further connected to ground 19 via a resistor.

For communication 4 from the reader 1 to the data carrier 2 via the electromagnetic field 3, the carrier 34 with superposed transmission coding 31 of the communication data is delivered - as the current i or as part of the current i - from the control module 14 to the current source 12, in particular to the base of the transistor 15. The current i with the carrier 34 and superposed transmission coding 31 of the data is further delivered via the collector to the antenna 11 and superposed on the direct current lo provided to the antenna 11 from the power supply 41. The electro-magnetic field 3 of the current i superposed on the direct current lo is emitted by the antenna 11" thereby enabling the reader 1 to exchange data with the data carrier 2, in particular to send data to the data carrier 2.

In a further embodiment, the base of the transistor 15 is configured to receive a disable signal via a disable line 24. The disable line 24 comprises a resistor and is connected to ground via a capacitor. The disable signal is used to functionally disable, or to temporarily disconnect, the current source 12. For example, when the disable signal is activated it effects the base of the transistor 15 such that data, in particular the carrier 34 with superposed transmission coding 31, provided by the control module 14 has no effect on the current source 12. Accordingly, the current source 12 does not handle and forward the carrier 34 and superposed transmission coding 31. Accordingly, the corresponding current i is not provided to the antenna 11 and no electro-magnetic field 3 is emitted. In other words, no communication 4 takes place from the reader 1 to the data carrier 2 when the disable signal is active (present, activated).

A workpoint 20 of the current source 12, defined for example by the intersection of the disable line 24 and the transmission line 21, is connected, or is in contact respectively, to the base of the transistor 15. In principle, the workpoint 20 is independent of the disable line 24. On one side, at the workpoint 20, for example, the current i provided to the current source 12 is defined, in detail the amplitude of the current i. This is basically the current provided to the base of the transistor 15. On the other side, the workpoint 20 is used to define the direct current lo that is provided by the power supply 41 to the current source 12. The direct current lo has to be big enough, such that the total current, consisting of the direct current lo and the current i superposed on the direct current lo, - as well as the respective voltage, is positive at any time.

Figure 6 shows details of second embodiment of the reader 1. The current source 12 of the reader 1 comprises two transistors 15.1, 15.2. The antenna 11 - in particular one connector of the antenna 11 - is connected to both transistors 15.1, 15.2, and by the receiver line 22 further to the control module 14. The other end of the antenna 11 is connected to ground. Both transistors, in particular their bases, are connected via the transmission line 21 (comprising resistors and/or the filter assembly 17) to the control module 14. The emitter of the first transistor 15.1 is connected via a resistor to a positive voltage of the power supply 41.1. The collector of the second transistor 15.2 is connected via a resistor to a negative voltage of the power supply 41.2. Furthermore, the emitter of the first transistor 15.1, as well as the collector of the second transistor 15.2, are connected via two subunits 13 to their bases. These subunits 13 basically act as bipolar current sources for the two transistors 15.1, 15.2. The power supplies 41.1, 41.2 of the two transistors 15.1, 15.2 of the current source 12 are used alternatively to provide the current i from the current source 12 to the antenna, for emission of the respective electro-magnetic field 3 to the data carrier 2. The current i depends on the carrier 34 and superposed transmission coding 31 of communication data, if applicable, as provided by the control module 14 to the current source 12.

A current source as shown in Figure 6 has the main advantage that loss of power is reduced and thus the efficiency is improved, compared with a current source which depends on the direct current lo, as shown in Figure 5. An improved efficiency is particularly advantageous for a battery powered reader.

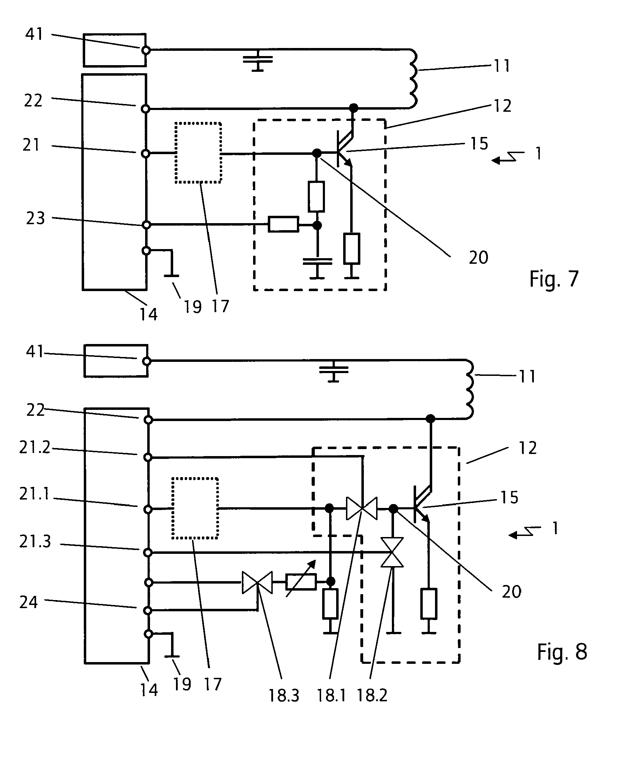

Figure 7 shows details of a third embodiment of the reader 1. The current source 12 comprises one transistor 15. On one side, the antenna 11 is connected to the transistor 15 and - via the receiver line 22 - to the control module 14. On the other side, the antenna is connected to the power supply 41. The current source 12 and the control module 14 are connected via the transmission line 21. The current source 12 is further connected to a digital-analog-converter of the control module 14 via a digital-analog-converter line 23. In the current source 12, the transmission line 21 and the digital-analog-converter line 23 are merged and connected to the base of the transistor 15. Comparable with the embodiment shown in Figure 6, the digitat-anatog-converter is used to turn on and off the carrier 34 - including the transmission coding 31 superposed on the carrier 34 - provided to the current source 12, or the transistor 15 of the current source 12 respectively. Accordingly, the digital-analog-converter is used to control the current i provided to the antenna 11 and the respective electro-magnetic field 3 emitted to the data carrier 2.

Figure 8 shows details of a forth embodiment of the reader 1. The current source 12 comprises one transistor 15 connected to the control module 14 via a first transmission line 21.1. The first transmission line 21.1 is used to provide the carrier 34 from the control module 14 to the current source 12. Basically, the carrier 34 is - after having passed the filter assembly 17 - a clean HF signal. A first switch 18.1, for example a quad bilateral switch, is used to connect the first transmission line 21.1 and a second transmission line 21.2. The second transmission line 21.2 is used to provide the transmission coding 31.1 for superposing on the carrier 34. Additionally, an inverted transmission coding 31.2 is provided from the control module 14 to the carrier 34 via a third transmission line 21.3, connected to the first transmission line 21.1 via a second switch 18.2. The second switch 18.2 is arranged between the first switch 18.1 and the transistor 15, in particular the base of the transistor15. Furthermore the first transmission line 21.1, providing the clean HF signal (carrier 34), is connected - via the workpoint 20 of the current source 12 between the filter assembly 17 and the first switch 18.1 - to the disable line 24 via a third switch 18.3 and a potentiometer The disable signal provided by the disable line 24 basically works as described in Figure 6.

To provide separately the carrier 34 and the transmission coding 31 of a transmission protocol from the control module 14 to the current source 12, and accordingly to superpose the transmission coding 31 on the carrier 34 in the current source 12, has the advantage that the transmission coding 31 is superposed on the carrier 34, or switched on and off respectively, faster and more easily. This is possible because the transmission coding 31 is independent from the filter assembly 17 and is advantageous, for example, to implement a fast transmission protocol.

### Reference numerals

- 1: read/write device, reader
- 2: data carrier (tag, IC card)
- 3: electro-magnetic field
- 4: non-contact communication
- 11: antenna
- 12: current source
- 13: subunits
- 14: control module (logic)
- 15: transistor
- 16: amplifier module
- 17: filter
- 18: switches
- 19: ground
- 20: workpoint
- 21: transmission line
- 22: receiver line
- 23: digital-analog-converter line
- 24: disable line
- 31: transmission coding
- 32: receiver coding
- 34: carrier
- 41: power supply

- i: current
- lo: direct current
- Uo: supply voltage

- 110: matching network
- 112: voltage source
- u: voltage

## Claims

1. A read/write device (1) for non-contact communication (4) with at least one data carrier (2) by way of an electro-magnetic field (3) transceived via at least one antenna (11), the read/write device (1) comprising:
A current source (12) configured to provide a current (i) to the antenna (11), and a control module (14) configured to drive the current source (12) for performing the non-contact communication (4).

2. The read/write device (1) according to claim 1, **characterized in that** the current source (12) comprises at least one switching or amplifying element, which is connected to the control module (14) and to the antenna (11).

3. The read/write device (1) according to claim 2, **characterized in that** the current source (12) comprises a transistor (15) with a base connected to the control module (14), a collector connected to the antenna (11) and an emitter connected to ground (19).

4. The read/write device (1) according to one of the claims 1 to 3, **characterized in that** the read/write device (1) is configured to provide a direct current (lo) to the antenna (11), whereby the direct current (lo) is greater than an amplitude of the current (i) provided by the current source (12).

5. The read/write device (1) according to one of the claims 1 to 4, **characterized in that** the current source (12) comprises two switching or amplifying elements both connected to the control module (14) and to the antenna (11), wherein one of the elements is further connected to a positive power supply (41.1) and the other one of the elements is connected to a negative power supply (41.2).

6. The read/write device (1) according to one of the claims 1 to 5, **characterized in that** the control module (14) is configured to drive the current source (12) by supplying to the current source (12), superposed on a carrier (34), data encoded according to a transmission coding (31).

7. The read/write device (1) according to one of the claims 1 to 6, **characterized in that** the read/write device (1) comprises an amplifier module (16) configured to amplify the current (i) provided to the antenna (11) by the current source (12).

8. The read/write device (1) according to claim 7, **characterized in that** the amplifier module (16) is arranged either between the control module (14) and the current source (12) or between the current source (12) and the antenna (11).

9. The read/write device (1) according to one of the claims 1 to 8, **characterized in that** the read/write device (1) is configured to temporarily disable the current source (12).

10. The read/write device (1) according to claim 9, **characterized in that** the control module (14) is configured to provide a disable signal (33) for disabling the current source (12).

11. The reader device (1) according to one of the claims 1 to 10, **characterized in that** a frequency of the electro-magnetic field of the carrier (34) is between 100 kHz and 135 kHz, or a frequency of the industrial, scientific and medical band (ISM frequency), preferably 13.56 MHz.

12. A method of operating a read/write device (1) for non-contact communication (4) with at least one data carrier (2) by way of an electro-magnetic field (3) transceived via at least one antenna (11), comprising the steps of:
a) Providing a current (i) from a current source (12) to the antenna (11) for emitting the electro-magnetic field (3);
b) Driving the current source (12) via a control module (14) for performing non-contact communication (4) via the electro-magnetic field (3).

13. The method according to claim 12, **characterized in that** non-contact communication (4) from the read/write device (1) to the data carrier (2) is effected by the current (i) comprising a carrier (34) and a transmission coding (31) superposed on the carrier (34) as provided from the control module (14) to the current source (12).

14. The method according to one of the claims 12 or 13, **characterized in that** the current (i) is superposed on a direct current (lo) delivered to the current source (12) by a power supply (41).

15. The method according to one of the claims 12 to 14, **characterized in that** a transistor (15) of the current source (12) is used to provide the current (i) to the antenna (11).
